(19) Europäisches Patentamt / European Patent Office / Office européen des brevets

(11) **EP 4 328 818 B1**

(12) **EUROPEAN PATENT SPECIFICATION**

(45) Date of publication and mention
of the grant of the patent:
**01.07.2026 Bulletin 2026/27**

(21) Application number: **22779303.1**

(22) Date of filing: **16.05.2022**

(51) International Patent Classification (IPC):
**G05D 1/00** *(2024.01)*     **G05D 1/43** *(2024.01)*
**G05D 1/246** *(2024.01)*     **G05D 1/648** *(2024.01)*
**G05D 1/698** *(2024.01)*     **G06Q 10/047** *(2023.01)*
**G06Q 10/0631** *(2023.01)*     **B64U 10/13** *(2023.01)*

(52) Cooperative Patent Classification (CPC):
**G05D 1/0219; G05D 1/0297; G05D 1/2464;
G05D 1/43; G05D 1/648; G05D 1/6987;
G06Q 10/047; G06Q 10/06311; B64U 10/13;
B64U 2201/10; G05D 2105/89; G05D 2107/75**

(86) International application number:
**PCT/IB2022/054516**

(87) International publication number:
**WO 2022/208491 (06.10.2022 Gazette 2022/40)**

(54) **MONITORING PLAN CREATION DEVICE, MONITORING SYSTEM, MONITORING PLAN CREATION METHOD, AND PROGRAM**

VORRICHTUNG ZUR ERZEUGUNG EINES ÜBERWACHUNGSPLANS, ÜBERWACHUNGSSYSTEM, VERFAHREN ZUR ERZEUGUNG EINES ÜBERWACHUNGSPLANS UND PROGRAMM

DISPOSITIF DE CRÉATION DE PLAN DE SURVEILLANCE, SYSTÈME DE SURVEILLANCE, PROCÉDÉ DE CRÉATION DE PLAN DE SURVEILLANCE ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.02.2024 Bulletin 2024/09**

(73) Proprietor: **Mitsubishi Heavy Industries, Ltd.**
**Tokyo 100-8332 (JP)**

(72) Inventors:
• **KOYAMA, Takayuki**
**Tokyo 100-8332 (JP)**
• **MORI, Shigeyuki**
**Tokyo 100-8332 (JP)**
• **FUKAMI, Tomoya**
**Tokyo 100-8332 (JP)**

(74) Representative: **Cabinet Beau de Loménie**
**103, rue de Grenelle**
**75340 Paris Cedex 07 (FR)**

(56) References cited:
**JP-A- 2003 288 118     JP-A- 2007 241 340
JP-A- 2008 234 636     JP-A- 2012 150 828
JP-A- 2014 064 215     JP-A- 2014 064 215
JP-B1- 6 739 078     US-A1- 2018 283 870**

• **KAPPEL KRISTOFER S ET AL: "Strategies for Patrolling Missions with Multiple UAVs",** JOURNAL OF INTELLIGENT, SPRINGER NETHERLANDS, DORDRECHT, vol. 99, no. 3-4, 12 September 2019 (2019-09-12), pages 499 - 515, XP037205777, ISSN: 0921-0296, [retrieved on 20190912], DOI: 10.1007/S10846-019-01090-2

Remarks:
restoration request accepted under unintentional criterion during international phase remark 1

## Description

[Technical Field]

The present disclosure relates to a monitoring plan generation device, a monitoring system, a monitoring plan generation method, and a program.

Priority is claimed on Japanese Patent Application No. 2021-054905, filed March 29, 2021.

[Background Art]

In recent years, there have been increasing opportunities to carry out work such as monitoring and inspection using uncrewed vehicles such as so-called drones. By using an uncrewed vehicle, it is possible to save manpower, and there is an advantage that it becomes possible to work in a dangerous place or a place that people cannot enter. For example, in infrastructure facilities such as power generation plants, there is a need to continuously monitor a wide area of the facility regardless of day or night, and autonomous constant monitoring with uncrewed vehicles is required.

Patent Document 1 discloses a technology in which a monitoring target area is divided into a plurality of small areas, monitoring is performed for each small area by an uncrewed vehicle, unmonitored small areas are given a high priority, and an uncrewed vehicle is moved in order of the small areas having the highest priority to perform monitoring. Patent Document 2 discloses control of changing an importance of an action in accordance with changes in a situation and causing changes in actions of each uncrewed vehicle in accordance with the situation when monitoring or the like is performed by a plurality of uncrewed vehicles. Patent Document 3 discloses control in which each uncrewed vehicle autonomously selects an operation that achieves overall optimization of a plurality of uncrewed vehicles operating cooperatively. Patent Document 4 discloses a patrol route setting apparatus that takes presence probabilities into account.

[Citation List]

[Patent Literature]

[Patent Literature 1]
PCT International Publication No. WO 2019/171491
[Patent Literature 2]
PCT International Publication No. WO 2020/188818
[Patent Literature 3]
PCT International Publication No. WO 2019/215838
[Patent Literature 4]
US Publication No. 2018/283870

[Summary of Invention]

[Technical Problem]

In Patent Documents 1 to 3, monitoring technologies using an uncrewed vehicle and methods for controlling a plurality of uncrewed vehicles have been proposed, but technologies for continuously monitoring a target area using an uncrewed vehicle have not been disclosed.

The present disclosure provides a monitoring plan generation device, a monitoring system, a monitoring plan generation method, and a program capable of solving the problems described above.

[Solution to Problem]

According to one aspect of the present disclosure, a monitoring plan generation device is defined in claim 1.

According to another aspect of the present disclosure, a monitoring system includes the monitoring plan generation device described above, and one or a plurality of uncrewed vehicles that behave on the basis of the action plan information.

According to still another aspect of the present disclosure, a monitoring plan generation method is defined in claim 10.

According to still another aspect of the present disclosure, a program is defined in claim 11.

[Advantageous Effects of Invention]

According to the monitoring plan generation device, the monitoring system, the monitoring plan generation method, and the program described above, it is possible to perform continuous monitoring with an uncrewed vehicle.

[Brief Description of Drawings]

FIG. 1 is a diagram which shows an example of a monitoring system according to an embodiment.
FIG. 2A is a first diagram which shows a monitoring area and a division method thereof according to the embodiment.
FIG. 2B is a second diagram which shows the monitoring area and the division method thereof according to the embodiment.
FIG. 3A is a first diagram for describing a method for updating a monitoring priority according to the embodiment.
FIG. 3B is a second diagram for describing the method for updating a monitoring priority according to the embodiment.
FIG. 4 is a diagram which describes a method for calculating a monitoring route according to the embodiment.
FIG. 5A is a first diagram which describes a method for creating a monitoring map according to the embodiment.
FIG. 5B is a second diagram which describes the method for creating a monitoring map according to the embodiment.
FIG. 6 is a flowchart which shows an example of an operation of the monitoring system according to the embodiment.
FIG. 7A is a first diagram which describes a method for identifying a monitored area according to the embodiment.
FIG. 7B is a second diagram which describes the method for identifying a monitored area according to the embodiment.
FIG. 8 is a diagram which shows an example of a general monitoring method using an uncrewed vehicle.
FIG. 9 is a diagram which shows an example of a hardware configuration of the monitoring system according to the embodiment.

[Description of Embodiments]

<Embodiment>

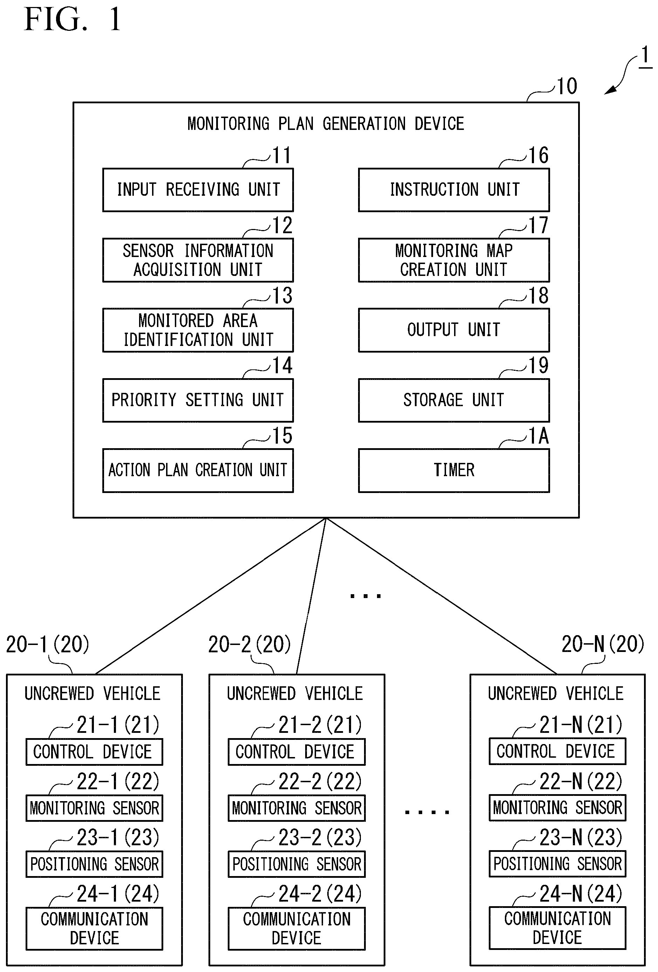

Hereinafter, a control method of an uncrewed vehicle of the present disclosure will be described with reference to FIGS. 1 to 9.

(Configuration)

FIG. 1 is a diagram which shows an example of a monitoring system according to an embodiment.
The monitoring system 1 includes a monitoring plan generation device 10 and n uncrewed vehicles 20-1 to 20-N. The monitoring plan generation device 10 plans an area to be monitored (a monitoring route) for each of the uncrewed vehicles 20-1 to 20-N. The monitoring plan generation device 10 instructs the uncrewed vehicles 20-1 to 20-N to use the planned monitoring route (action plan information). The uncrewed vehicles 20-1 to 20-N move along the instructed monitoring route and perform monitoring using cameras and the like.
The uncrewed vehicle 20-1 has a control device 21-1, a monitoring sensor 22-1, a positioning sensor 23-1, and a communication device 24-1. The control device 21-1 controls an overall operation of the uncrewed vehicle 20-1. The communication device 24-1 receives the action plan information instructed by the monitoring plan generation device 10. The control device 21-1 moves the uncrewed vehicle 20-1 on the basis of the action plan information and performs monitoring using the monitoring sensor 22-1. The monitoring sensor 22-1 is a camera, a temperature sensor, or the like, and is a sensor that collects information on an area to be monitored. The communication device 24 - 1 transmits information detected by the monitoring sensor 22-1 to the monitoring plan generation device 10. The positioning sensor 23-1 is, for example, a receiver of a satellite positioning system such as the Global Positioning System (GPS), an acceleration sensor, a gyro sensor, or the like. The communication device 24-1 transmits the positional information measured by the positioning sensor 23-1, or the information indicating a speed used to calculate the positional information, a movement direction of the uncrewed vehicle 20-1, and the like to the monitoring plan generation device 10.
The control device 21-1 includes a central processing unit (CPU) or graphics processing unit (GPU), and the information detected by the monitoring sensor 22-1 and the positioning sensor 23-1 is processed by this CPU, and the like, and may be made lighter. When the positioning sensor 23-1 is an acceleration sensor, or the like, the CPU or the like calculates the positional information, a speed movement, the movement direction, and the like of the uncrewed vehicle 20-1, and transmits a result of the calculation to the monitoring plan generation device 10 through the communication device 24-1.

Similarly, the uncrewed vehicle 20-2 includes a control device 21-2, a monitoring sensor 22-2, a positioning sensor 23-2, and a communication device 24-2. The uncrewed vehicle 20-N includes a control device 21-N, a monitoring sensor 22-N, a positioning sensor 23-N, and a communication device 24-N. The uncrewed vehicles 20-1 to 20-N may be different types of uncrewed vehicles. For example, the uncrewed vehicle 20-1 may be an uncrewed aerial vehicle (UAV), the uncrewed vehicle 20-2 may be an autonomous underwater vehicle (AUV), the uncrewed vehicle 20-3 may be an uncrewed vehicle that travels or walks on the ground, ..., and so forth. Types of monitoring sensors 22-1 to 22-N provided in the uncrewed vehicles 20-1 to 20-N and types of the positioning sensors 23-N may be different. An uncrewed vehicle 20, a control device 21, a monitoring sensor 22, a positioning sensor 23, and a communication device 24 will be described below when no particular distinction is required. There is no limit to the number of uncrewed vehicles 20, and it may be one or more.

Next, a function and a configuration of the monitoring plan generation device 10 will be described. The monitoring plan generation device 10 includes an input receiving unit 11, a sensor information acquisition unit 12, a monitored area identification unit 13, a priority setting unit 14, an action plan creation unit 15, an instruction unit 16, and a monitoring map creation unit 17, an output unit 18, a storage unit 19, and a timer 1A.

The input receiving unit 11 receives an instruction operation and an input of setting information from the user.

The sensor information acquisition unit 12 acquires information detected by the monitoring sensor 22 and the positioning sensor 23 from the uncrewed vehicle 20, or information processed and calculated by the control device 21 on the basis of these.

The monitored area identification unit 13 identifies an area monitored by the uncrewed vehicle 20. For example, the monitored area identification unit 13 may determine an area through which the uncrewed vehicle 20 has passed as a monitored area, analyze an image photographed by a camera (the monitoring sensor 22), determine that an area shown in the image has not been monitored, for example, when monitoring measures are not sufficiently photographed due to obstruction by structures and the like, and identify an area obtained by excluding an area determined not to have been monitored from the area through which the uncrewed vehicle 20 has passed as a monitored area. Alternatively, a route suitable for monitoring may be defined in advance on the basis of map information of the monitoring area 100 (for example, a route suitable for monitoring may be defined so that topographical conditions such as mountains and buildings do not prevent the camera from photographing of a monitoring target), even if a vehicle moves roughly along the monitoring route defined in the action plan information, when the vehicle deviates from the route suitable for monitoring, the range may be determined not to have been monitored, and the area obtained by excluding this range from the area through which the uncrewed vehicle 20 has passed may be identified as a monitored area.

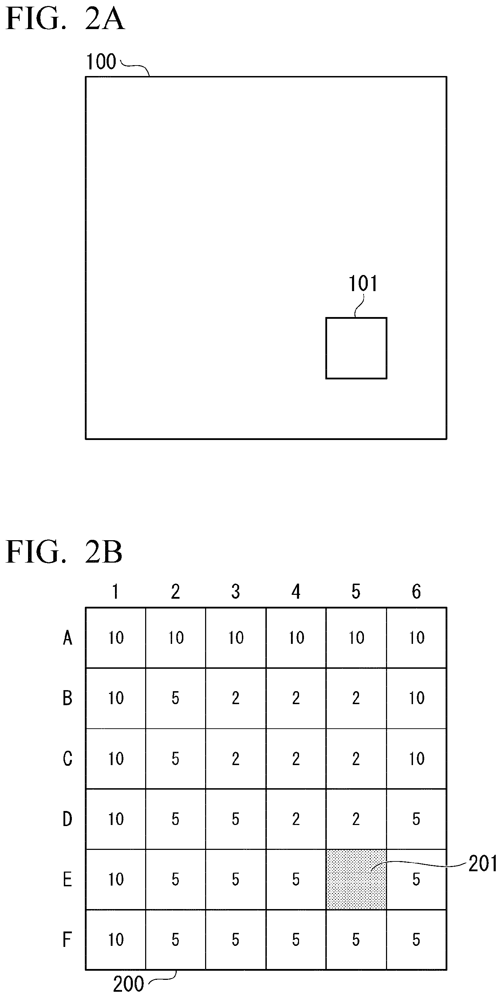

The priority setting unit 14 sets a priority for each small area when an entire area to be monitored is divided into a plurality of small areas. Specifically, the priority setting unit 14 sets a monitoring time interval for each small area as a monitoring priority. Reference is now made to FIG. 2A. FIG. 2A shows a monitoring area 100 indicating an area to be actually monitored, and FIG. 2B shows a monitoring map 200 obtained by modeling the monitoring area 100 for constant monitoring of the monitoring area 100. The monitoring area 100 is, for example, a place that is subject to monitoring, security, inspection, investigation, or the like such as a plant facility, an urban area, the sea, a mountain, a river, or an area including a plurality of these areas. The monitoring map 200 is digital data which is a virtual area corresponding to an area of the monitoring area 100, simulating a shape of the monitoring area 100, and is divided into small areas as shown. In the example of FIG. 2B, small areas are divided into grids so that respective areas are equal to each other, but the present invention is not limited to this, and a plurality of small areas are provided in any shape and with any area to cover all areas serving as a monitoring target. For example, a non-monitoring target area 101 within the monitoring area 100 is an area to be excluded from the monitoring target. In such a case, a corresponding area is also excluded from the monitoring target in the monitoring map 200 (a shaded area 201). The monitoring map 200 may be created by the user and input to the monitoring plan generation device 10, or may be created by the monitoring map creation unit 17 as described below. The priority setting unit 14 sets a monitoring time interval (a monitoring priority) for each small area of the monitoring map 200.

Here, one small area shown in FIG. 2B is called a cell, and a cell in row A and column 1 is written as a cell (1, A). Then, a number "10" in the cell (1, A) indicates that an area corresponding to the cell (1, A) in the monitoring area 100 needs to be monitored every 10 minutes. Similarly, a number "5" in a cell (2, B) indicates that an area in the monitoring area 100 corresponding to this cell needs to be monitored every 5 minutes, and a number "2" in a cell (3, B) indicates that an area corresponding to this cell in the monitoring area 100 needs to be monitored every two minutes. In other words, the smaller number in each cell requires more frequent monitoring and indicates a higher priority of monitoring. For example, the user inputs the monitoring map 200 and information on a monitoring time interval to be set for each cell to the monitoring plan generation device 10. The priority setting unit 14 sets an initial value of the monitoring time interval for each cell of the monitoring map 200 according to the information on the monitoring time interval input by the user. The monitoring map 200 in FIG. 2B shows a state in which the initial value of the monitoring time interval is set for each cell.

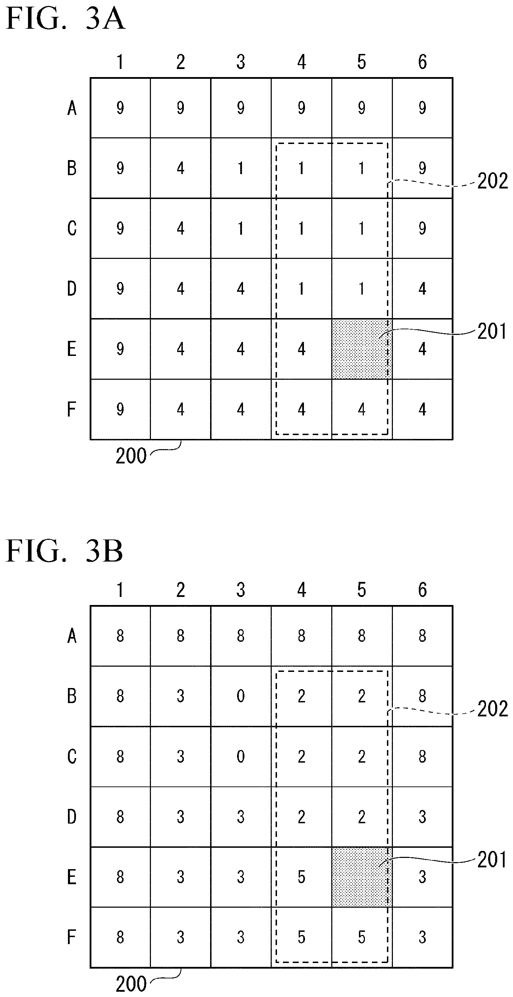

Next, reference is made to FIG. 3A. The priority setting unit 14 updates the monitoring time interval set in the monitoring map 200 in accordance with a passage of time. FIG. 3A shows the monitoring time interval of each cell one minute after a start of monitoring. When one minute has passed since the start of monitoring, the priority setting unit 14 subtracts "1" from the monitoring time interval of each cell. This corresponds, for example, to a fact that the cell (1, A) needs to be monitored every 10 minutes, but a remaining time until a time limit is 9 minutes. The priority setting unit 14 similarly updates a time interval of each cell whose monitoring time interval is set to 10 minutes with "9." The priority setting unit 14 updates the monitoring time interval of each cell whose initial value of the monitoring time interval is set to 5 minutes with "4." The priority setting unit 14 updates the monitoring time interval of each cell whose initial value of the monitoring time interval is set to 2 minutes with "1."

The priority setting unit 14 decreases the monitoring time interval in accordance with the passage of time, while resetting the monitoring time interval of a small area monitored by the uncrewed vehicle 20. For example, it is assumed that an area 202 is monitored by one or a plurality of uncrewed vehicles 20 from one minute to two minutes after the start of monitoring. Then, the priority setting unit 14 resets the monitoring time interval of each cell included in the area 202 to the initial value. Specifically, for example, initial values of a cell (4, B) and a cell (5, F) are "2" and "5," respectively, so that the priority setting unit 14 updates the monitoring time interval of the cell (4, B) with "2," and updates the monitoring time interval of the cell (5, F) with "5" regardless of the passage of time. This corresponds to, for example, that if an area that needs to be monitored once every 5 minutes is monitored once, the request will be satisfied if the area is monitored again within 5 minutes from that time. FIG. 3B shows the monitoring map 200 two minutes after the start of monitoring. As described above, a value of the monitoring time interval of the area 202 is reset to the initial value, and the values of the monitoring time interval of other cells are 1 smaller than the values in FIG. 3A. In this manner, the priority setting unit 14 continues processing of decreasing the value of the monitoring time interval set for each cell in accordance with the passage of time, and resetting it to the initial value when monitoring is performed.

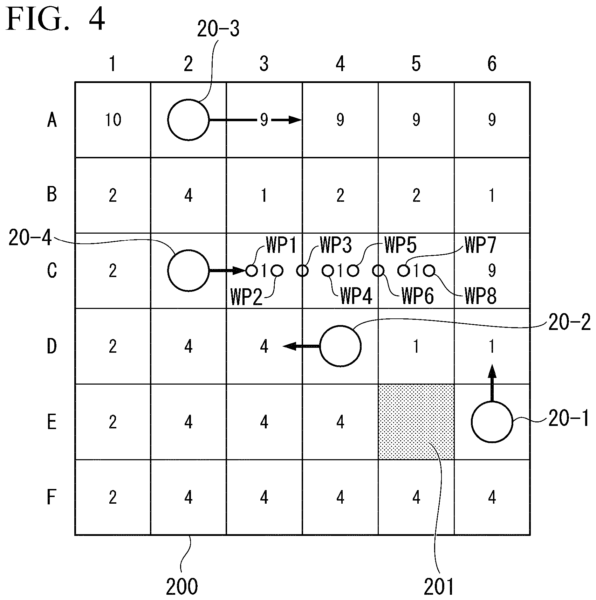

The action plan creation unit 15 calculates, for each uncrewed vehicle 20, an area that a corresponding uncrewed vehicle 20 is responsible for monitoring until a predetermined time ahead. The action plan creation unit 15 calculates an area (a monitoring route) that each uncrewed vehicle 20 is responsible for monitoring on the basis of a position of the uncrewed vehicle 20, the value of the monitoring time interval of each cell, and a movement direction or a movement speed of the uncrewed vehicle 20. FIG. 4 shows a situation in which three uncrewed vehicles 20-1 to 20-4 perform monitoring. Arrows attached to the uncrewed vehicles 20-1 to 20-4 indicate the movement direction and the movement speed at that time. The movement direction and the movement speed of each uncrewed vehicle 20 can be calculated based on, for example, momentary positional information of the uncrewed vehicles 20-1 to 20-4 acquired by the sensor information acquisition unit 12. For example, the action plan creation unit 15 (1) determines a goal (for example, which cell has the smallest monitoring time interval value) on the basis of the monitoring priority, (2) calculates a route to this goal using a graph search algorithm or the like, and repeats (1) and (2) while changing the goal and the route to create an action plan for each uncrewed vehicle 20. The action plan creation unit 15 evaluates, for example, the searched route on the basis of (a) the priority (monitoring time interval value) set in each cell and (b) a movement cost of the uncrewed vehicle 20, and selects a route with highest evaluation.

(a) The priority set for each cell is a latest monitoring time interval of each cell. For example, when a cell (1, B) with an initial value of "10" and a cell (2, B) with an initial value of "5" are compared, a priority of the cell (2, B) is higher in an initial state, but when the cell (2, B) is monitored and the cell (1, B) is not monitored in accordance with the passage of time, and the like, as shown in FIG. 4, a situation can occur in which a value of the cell (1, B) is "2" and a value of the cell (2, B) is "4." In this situation, the priority of the cell (1, B) is higher than that of the cell (2, B). The action plan creation unit 15 calculates a goal and a route (a monitoring route) to the goal so that cells with high priority can be monitored with priority. For example, if three cells with high priority are lined up in an immediate vicinity of the uncrewed vehicle 20-4 in the movement direction, the action plan creation unit 15 calculates those three cells as the monitoring route of an uncrewed vehicle 20-N. More specifically, the action plan creation unit 15 calculates waypoints (target passing points) WP1 to WP8 through which the uncrewed vehicle 20-4 passes through the three areas. When waypoints WP1 to WP8 are given, the control device 21-4 causes the uncrewed vehicle 20-4 to move to trace the waypoints. During the movement, the surroundings are photographed by a camera (the monitoring sensor 22-N), and these three cells are monitored by transmitting an image photographed by the communication device 24-4 to the monitoring plan generation device 10. In other words, when a monitoring route is calculated, that monitoring route becomes an area to be monitored as it is.

(b) The movement cost of the uncrewed vehicle 20 is a quantified value of one or a plurality of a distance from a current position to a goal cell, a time required for a movement, an energy consumption required for a movement, an ease of a movement, and the like. For example, in a case of the uncrewed vehicle 20-1 in FIG. 4, there is a cell (6, D) with a high priority (a remaining time=1 minute) in a cell next to the current position in a movement direction. There is a cell (5, D) with a high priority next to it. In such a case, the action plan creation unit 15 calculates a cost when moving the uncrewed vehicle 20-1 from the cell (6, E) to the cell (6, D) and then to the cell (5, D) using a predetermined formula. The action plan creation unit 15 also calculates the movement cost when the uncrewed vehicle 20-1 travels along another monitoring route. Then, the action plan creation unit 15 calculates, for example, a weighted sum of (a) points based on the priority set for each cell and (b) points based on the movement cost of the uncrewed vehicle 20, and selects a suitable monitoring route having a favorable value.

(a) Points based on the priority set for each cell are, for example, values calculated by giving a point according to the priority. For example, (a) the points based on the priority set for each cell may be calculated using a method of adding 100 points each time a cell with a monitoring time interval value of "0" is monitored, adding 50 points each time a cell with a time interval value of "1" is monitored, ..., and adding no points even if a cell with a monitoring time interval value of "5" or more is monitored. Alternatively, in addition to this method, points may be calculated by imposing a penalty (for example, -50 points for one cell with a value of "0") depending on the number of cells with a monitoring time interval value of "1" or "0" remaining when monitoring is performed along the monitoring route.

(b) Points based on the movement cost of the uncrewed vehicle 20 are values obtained by converting, for example, the movement time to the goal, the energy consumption required for a movement in consideration of effects of a tidal current and wind into points according to a predetermined rule. For example, the converted points become smaller as the movement time or the energy consumption required for a movement increases, and the converted points become larger as the movement time or the energy consumption required for a movement decreases. For example, there is a cell (5, D) whose monitoring time interval is "1" in an exactly opposite direction of a movement of the uncrewed vehicle 20-2 in FIG. 4. A straight-line distance between the uncrewed vehicle 20-2 and a current cell (4, D) is short, but if it costs a lot to turn the uncrewed vehicle 20-2, or there are restrictions such as not being able to turn directly behind it, (b) the points based on the movement cost of the uncrewed vehicle 20 when the uncrewed vehicle 20-2 is moved from the cell (4, D) to the cell (5, D) become smaller values (movement cost is "large"). For example, in the case of an uncrewed vehicle 20-3 shown in FIG. 4, there is a cell whose monitoring time interval is "1" in the diagonally adjacent cell (3, B), but if the movement direction and the movement speed of the uncrewed vehicle 20-3 are considered, it is necessary to apply a brake and decelerate to move from a current cell (2, A) to the cell (3, B). The action plan creation unit 15 may calculate points based on the movement cost of (b) the points based on the movement cost of the uncrewed vehicle 20 by giving a penalty for this deceleration. As a result of calculating the points in consideration of the brake penalty, for example, with a cell (6, B) (remaining time is "1") located at a farther position as a target instead of the cell (3, B) (remaining time is "1"), the points may also be calculated by setting a monitoring route that moves from the current cell (2, A) to a cell (3, A), a cell (4, A), a cell (5, B), and the cell (6, B) in this order as a route that yields good points.

For example, the action plan creation unit 15 may calculate P according to the following equation (1) for each uncrewed vehicle 20, and determine a movement route with the best P as the monitoring route. $\alpha$ and $\beta$ are weighting coefficients that can be set arbitrarily by the user.

$$P = \alpha \times \text{"(a) Points based on the priority set for each cell"}$$

$$+\beta \times \text{"(b) Points based on the movement cost of uncrewed vehicle 20"} \quad \dots(1)$$

Alternatively, the action plan creation unit 15 may calculate the movement route of each uncrewed vehicle 20 when the sum of P calculated for each uncrewed vehicle 20 is the best as an overall optimal solution, and determine the movement route calculated at this time as the monitoring route. A length of the monitoring route calculated at one time (the number of moving cells) may change each time or may be different for each uncrewed vehicle 20.

For example, if the monitoring area 100 straddles land and sea, and the sea is monitored using AUV, and a range of the land is monitored using a robot or UAV that travels on the ground, the action plan creation unit 15 will divide all cells into sea and land, calculate the monitoring route using the AUV within a range of cells corresponding to the sea, and calculate the monitoring route using the UAV within a range of cells corresponding to the land. The action plan creation unit 15 may calculate the monitoring route on the basis of map information corresponding to the monitoring area 100. For example, when monitoring is performed from the air using the UAV, if there is a location where a monitoring target cannot be photographed due to an influence of structures, or the like, the monitoring route is corrected so that the positional relationship between the uncrewed vehicle 20 and the monitoring target is suitable for monitoring (photographing), and the corrected monitoring route may be used as a final monitoring route.

If the monitoring route is determined using the monitoring map 200, the action plan creation unit 15 converts the monitoring route into action plan information (for example, waypoints indicating the monitoring route) that actually commands the uncrewed vehicle 20.

The instruction unit 16 transmits action plan information (for example, waypoints indicating a monitoring route) calculated for each uncrewed vehicle 20 by the action plan creation unit 15 to a corresponding uncrewed vehicle 20.

The monitoring map creation unit 17 creates the monitoring map 200. For example, the user inputs map information for the monitoring area 100 (for example, maps of urban areas and facilities), information indicating where the monitoring target is (for example, roads), and a size of one cell or the number of cells (number of divisions) to the monitoring plan generation device 10. Then, the monitoring map creation unit 17 generates map information of a planar image that simulates a shape of the monitoring area 100 on the basis of the input map information, divides this area into the specified number of cells, and creates the monitoring map 200. The monitoring map creation unit 17 separates a monitoring target area into roads and other portions, and sets the portions other than the roads as non-monitoring symmetric areas.

The monitoring map creation unit 17 may receive a specification of the range of the monitoring area from the user, and may create the monitoring map information for the received range. For example, a setting such as "monitor a 3 km square area 15 km ahead" for a current location of a certain uncrewed vehicle 20 is input to the monitoring plan generation device 10. Then, the monitoring map creation unit 17 generates map information corresponding to, for example, a 3 km square area 15 km ahead in the movement direction of the uncrewed vehicle 20 from the current position of the uncrewed vehicle 20, divides the area into the specified number of cells, and creates the monitoring map 200. The monitoring map creation unit 17 calculates positional information of, for example, four corners of the created monitoring map 200 on the basis of positional information of the current position of the uncrewed vehicle 20 and instruction information of "a 3 km square area 15 km ahead in the movement direction from the current position," and records positional relationship between the monitoring map 200 and an actual monitoring area 100 in the storage unit 19 in association with each other.

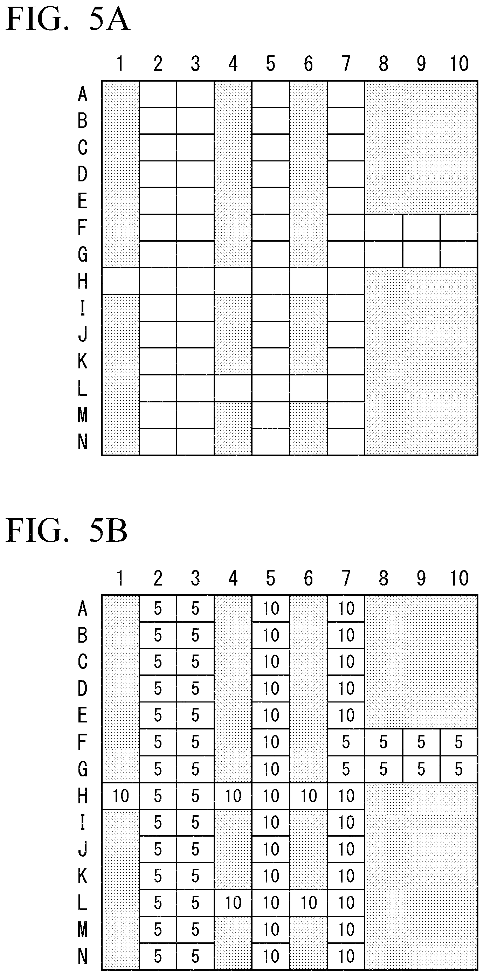

Alternatively, the monitoring map creation unit 17 may divide the monitoring area into cells of a size suitable for monitoring, instead of dividing the area into cells on the basis of the number of divisions input by the user. For example, in the case of roads, cells may be created depending on a road width. An example of the monitoring map 200 created by the monitoring map creation unit 17 is shown in FIG. 5A. Shaded areas in the monitoring map 200 are, for example, non-monitored areas where buildings and the like are built. Regarding roads to be monitored, wide roads are divided into two cells, and narrow roads are divided into a corresponding one cell. The output unit 18 outputs the monitoring map 200 to a display device. The user can set the monitoring time interval of each cell by looking at the displayed monitoring map 200.

The monitoring map creation unit 17 may set a monitoring time interval of each cell. For example, the user inputs setting conditions for the monitoring time interval along with map information and monitoring target information (roads). In the example in FIG. 5A, the user enters the size of a road (a road width and the number of lanes) and the monitoring time interval in association with each other, or the user enters a name of a road, a town name, or the like and the monitoring time interval in association with each other. Then, the monitoring map creation unit 17 sets the monitoring time interval for a corresponding cell. FIG. 5B shows an example where the monitoring time interval "5" is set for a wide road and the monitoring time interval "10" is set for a narrow road. Settings of the monitoring time interval may be changed depending on a time zone. For example, a user inputs setting information to the monitoring plan generation device 10 such as setting the monitoring time interval in a time zone when there is no traffic of people such as at night to be shorter than during the day, and the monitoring map creation unit 17 may create the monitoring map 200 separately for day and night on the basis of this setting information.

The output unit 18 outputs various types of information such as the monitoring map 200 to a display device or an electronic file.

The storage unit 19 stores various types of information such as the monitoring map 200.

The timer 1A measures time. The priority setting unit 14 updates the monitoring time interval of each cell on the basis of the time measured by the timer 1A.

The monitoring plan generation device 10 may be configured from a plurality of computers. For example, the instruction unit 16 is mounted as a repeater (gateway) on another computer, and when action plan information is transmitted to the uncrewed vehicle 20, this computer may be responsible for sorting out various types of information to be transmitted to and received from the uncrewed vehicle 20.

(Operation)

Next, a flow of continuous monitoring processing by the monitoring system 1 will be described.

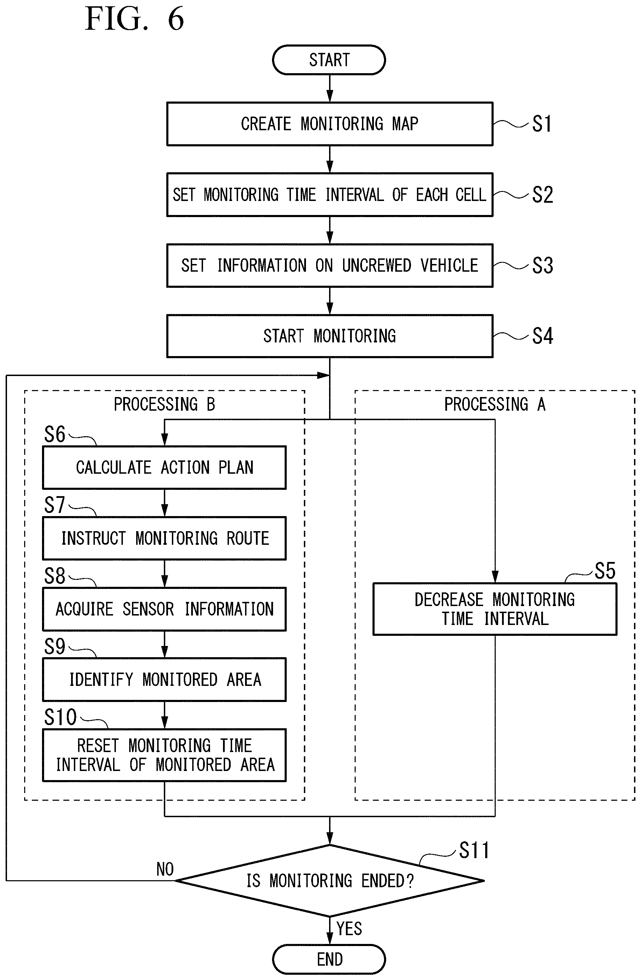

FIG. 6 is a flowchart which shows an example of an operation of the monitoring system according to the embodiment.

First, a monitoring map 200 is created (step S1). Next, a monitoring time interval is set for each cell of the monitoring map 200 (step S2). For example, a user creates the monitoring map 200 corresponding to the monitoring area 100 using spreadsheet software or the like, and inputs information in which a monitoring time interval is set for each cell to the monitoring plan generation device 10. The input receiving unit 11 receives this input and records the monitoring map 200 in which the monitoring time interval is set in the storage unit 19. Alternatively, after the user inputs the monitoring map 200 corresponding to the monitoring area 100 to the monitoring plan generation device 10, the output unit 18 causes a display device to display the input monitoring map 200. Then, the user sets a monitoring time interval for each cell of the displayed monitoring map 200. The input receiving unit 11 acquires the set monitoring time interval, and the priority setting unit 14 sets the input monitoring time interval to a corresponding cell and records the monitoring time interval for each cell in the storage unit 19. Alternatively, as described using FIGS. 5A and 5B, the monitoring map creation unit 17 may create the monitoring map 200 and record the created monitoring map 200 in the storage unit 19.

Next, the user sets information on the uncrewed vehicle (step S3). For example, the user sets the number and types of uncrewed vehicles 20 to be used for monitoring, areas where monitoring can be performed, and the like. For example, two UAVs, one AUV, and a range such as the sea or river for the AUV are specified. The input receiving unit 11 receives an input of the set information and records these types of information in the storage unit 19.

Next, the monitoring system 1 starts monitoring according to an instruction of the user (step S4).

The monitoring system 1 performs processing A in step S5 and processing B in steps S6 to S10 in parallel, which will be described below.

The priority setting unit 14 decreases the monitoring time interval of each cell of the monitoring map 200 at a predetermined time interval (step S5). For example, the priority setting unit 14 subtracts a value of the monitoring time interval of each cell by 1 every minute on the basis of a time measured by the timer 1A. An interval of the decrease does not have to be every minute. For example, the priority setting unit 14 may subtract the value of the monitoring time interval of each cell by 10 seconds every 10 seconds. The priority setting unit 14 continuously executes this operation while monitoring is performed (processing A).

On the other hand, in processing B, the action plan creation unit 15 calculates an action plan for each uncrewed vehicle 20 (S6). For example, the action plan creation unit 15 sets a cell with a high priority as a goal on the basis of the monitoring time interval of each cell. The action plan creation unit 15 searches for various routes leading to the goal using a graph search algorithm or the like. Then, the action plan creation unit 15 selects a monitoring route for which a value of P is maximum, using, for example, the equation (1) described above.

Next, the instruction unit 16 transmits the action plan information for each uncrewed vehicle 20 calculated in step S6 to a corresponding uncrewed vehicle 20, and instructs a next monitoring route (step S7). In the uncrewed vehicle 20, the communication device 24 acquires the action plan information, and the control device 21 controls a movement of the uncrewed vehicle 20 on the basis of the action plan information. In the moving uncrewed vehicle 20, the monitoring sensor 22 detects information used for monitoring. The positioning sensor 23 detects the positional information during a movement. The communication device 24 transmits the information detected by these sensors and the detection time to the monitoring plan generation device 10.

In the monitoring plan generation device 10, the sensor information acquisition unit 12 acquires sensor information (step S8). The sensor information is, for example, an image photographed by a camera (the monitoring sensor 22) or positional information of the uncrewed vehicle 20 detected by a GPS receiver (the positioning sensor 23). The sensor information acquisition unit 12 records the acquired sensor information together with its detection time in the storage unit 19.

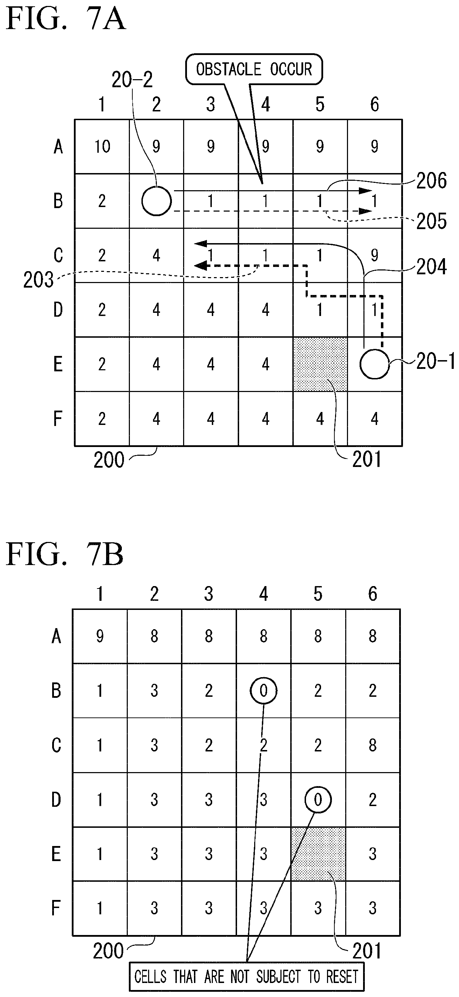

Next, the monitored area identification unit 13 identifies a monitored area (step S9). For example, the monitored area identification unit 13 estimates an actual movement route of the uncrewed vehicle 20 from the time-series positional information of the uncrewed vehicle 20 acquired in step S8, and identifies a cell (a cell containing a virtual movement route) overlapping a virtual movement route on the monitoring map 200 corresponding to the estimated movement route as a monitored area. Here, reference is made to FIG. 7A. A dashed arrow 203 in FIG. 7A is an example of the action plan information of an uncrewed vehicle 20-1 calculated by the action plan creation unit 15. A solid arrow 204 in FIG. 7A is an actual movement route of the uncrewed vehicle 20-1. The monitored area identification unit 13 identifies a cell (6, D), a cell (5, C), a cell (4, C), and a cell (3, C) through which the solid arrow 204 passes instead of the dashed arrow 203 as monitored areas.

For example, the monitored area identification unit 13 may further determine, in addition to the positional information, whether a monitoring target area is shown in an image on the basis of the image acquired in step S18, and exclude cells for which a predetermined number or more of images that do not contain information necessary for monitoring have been photographed among cells related to the actual movement route from the monitored area. For example, when an image where the monitoring target cannot be photographed because an obstacle blocks a field of view of the camera, or the monitoring target cannot be photographed because it is covered by a structure, and the like is photographed a certain percentage or more while a vehicle moves in a certain area, the monitored area identification unit 13 excludes a cell corresponding to that area from the monitored area. Referring to FIG. 7A again, a dashed arrow 205 in FIG. 7A is a monitoring route of the uncrewed vehicle 20-2 calculated by the action plan creation unit 15. A solid arrow 206 in FIG. 7A is the actual movement route of the uncrewed vehicle 20-2. In this example, the uncrewed vehicle 20-2 is moving along an original monitoring route. However, suppose that an obstacle occurs in a cell (4, B) and an image with a required quality cannot be photographed. Then, the monitored area identification unit 13 identifies the cell (3, B), the cell (5, B), and the cell (6, B) except the cell (4, B) as a monitored area.

For example, the monitored area identification unit 13 may identify a cell corresponding to the actual movement route as a monitored area when a difference between a monitoring route (for example, the dashed arrow 205) indicated by action plan information and an actual movement route (for example, the solid arrow 206) of the uncrewed vehicle 20-2 (for example, a distance between the dashed arrow 205 and the solid arrow 206) is within an allowable range. This method can be used, for example, when the monitoring route is calculated as a route suitable for photographing in consideration of blind spots of the camera.

Next, the priority setting unit 14 resets the monitoring time interval of a monitored area (step S10). The priority setting unit 14 resets the monitoring time interval of the monitored area identified in step S9 to an initial value. Reference is made to FIG. 7B. The priority setting unit 14 initializes values of the cell (6, D), the cell (5, C), the cell (4, C), and the cell (3, C) to "2" for a movement of the uncrewed vehicle 20-1 shown by the solid arrow 204 in FIG. 7A. The priority setting unit 14 initializes values of the cell (3, B), the cell (5, B), and the cell (6, B) to "2" for a movement of the uncrewed vehicle 20-2 shown by the solid arrow 206 in FIG. 7A. The value of the monitoring time interval of the cell (4, B) and the cell (5, D) that are not subject to reset is decreased to "0" by processing A (step S5) that is being executed in parallel.

Next, the monitoring plan generation device 10 determines whether to continue monitoring (step S11). For example, when the user inputs an instruction to end monitoring to the monitoring plan generation device 10, the monitoring plan generation device 10 ends monitoring. When there is no instruction from the user to end monitoring, the monitoring plan generation device 10 continues monitoring. The monitoring plan generation device 10 repeats the processing from step S5 to step S10.

As described above, according to this embodiment, the monitoring time interval is set as a monitoring priority for each cell of the monitoring map 200, and this value is decreased in accordance with the passage of time, and the uncrewed vehicle 20 is controlled to monitor an area corresponding to a corresponding cell until this value becomes "0." As a result, areas with a high monitoring priority can be preferentially monitored. Once a certain area is monitored, the monitoring time interval of a cell corresponding to that area is set to the initial value. As a result, even if monitoring is completed once, there is an obligation to monitor the area again within a set monitoring time interval, and this is repeated, and thereby continuous monitoring is automatically executed. An entire area of the monitoring area 100 is divided into small areas on the monitoring map 200, and a monitoring time interval is set for each small area. Then, by continuing control of decreasing and resetting the monitoring time interval and moving the uncrewed vehicle 20 to perform monitoring until the monitoring time interval reaches "0" for each small area, it is possible to perform continuous and constant monitoring of the entire area of the monitoring area 100 without omission.

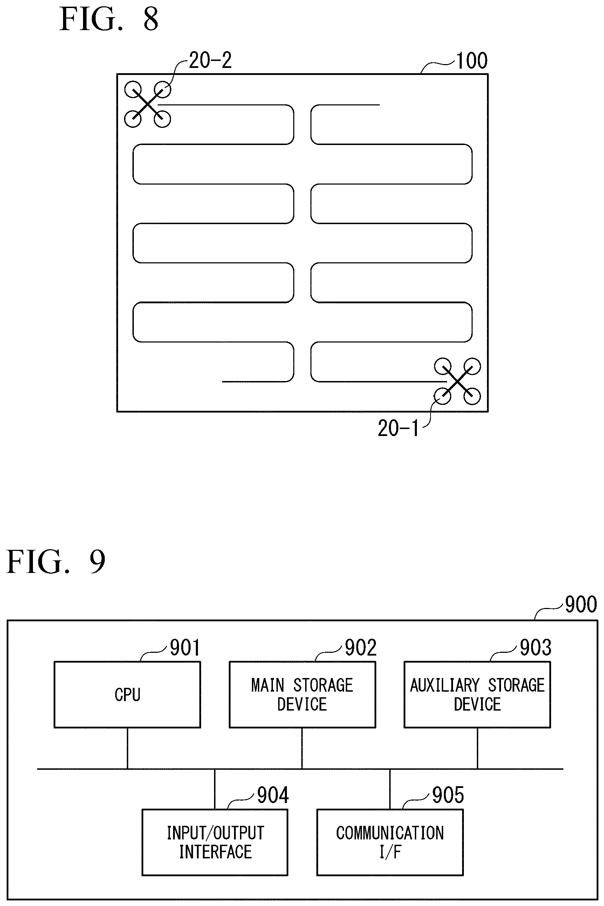

When monitoring is performed by a plurality of uncrewed vehicles 20, the monitored areas of the plurality of uncrewed vehicles 20 and the monitoring time interval of each cell are managed using one monitoring map 200 that is common to all uncrewed vehicles 20, and action plan information for the plurality of uncrewed vehicles 20 is created on the basis of this monitoring map 200. Thereby, for example, even if some uncrewed vehicles 20 are removed from the monitoring action due to tracking or the like, the remaining uncrewed vehicles 20 can cover the monitoring of the uncrewed vehicles 20 that are removed from the monitoring action. For example, in a case of monitoring with a general uncrewed vehicle, as shown in FIG. 8, a monitoring area is established for each uncrewed vehicle and monitoring is performed within the range. In this case, for example, if the uncrewed vehicle 20-2 discovers an abnormal object during monitoring and starts tracking the object, monitoring of a left half area of the monitoring area 100 may be interrupted. In contrast, according to the present embodiment, since the monitoring area is not originally established for each uncrewed vehicle 20, even if the uncrewed vehicle 20-2 is removed from the monitoring action, the remaining uncrewed vehicle 20-1 performs the monitoring on the basis of the monitoring time interval set for each cell. Therefore, constant monitoring can be continuously performed without causing any areas where monitoring is interrupted.

FIG. 9 is a diagram which shows an example of the hardware configuration of the monitoring system according to the embodiment.

A computer 900 includes a CPU 901, a main storage device 902, an auxiliary storage device 903, an input and output interface 904, and a communication interface 905.

The monitoring plan generation device 10 and the control device 21 described above are mounted on the computer 900. Each of the functions described above is stored in the auxiliary storage device 903 in a form of a program. The CPU 901 reads a program from the auxiliary storage device 903, develops it in the main storage device 902, and executes the processing described above according to the program. The CPU 901 reserves a storage area in the main storage device 902 according to the program. The CPU 901 reserves a storage area for storing data being processed in the auxiliary storage device 903 according to the program.

A program for realizing all or part of functions of the monitoring plan generation device 10 and the control device 21 is recorded on a computer-readable recording medium, and the program recorded on this recording medium is read by a computer system and executed, and thereby each functional unit may perform processing. The "computer system" herein includes an OS and hardware such as peripheral devices. It is assumed that the "computer system" includes a homepage providing environment (or a display environment) when a WWW system is used. The term "computer-readable recording medium" refers to a portable media such as a CD, a DVD, a USB, or a storage device such as a hard disk embedded in the computer system. When this program is distributed to the computer 900 via a communication line, the computer 900 having received the distribution may develop the program in the main storage device 902 and execute the processing described above. The program described above may be a program for realizing part of the functions described above, or may be a program that can realize the functions described above in combination with a program already recorded in the computer system. The functions of the monitoring plan generation device 10 may be distributed and mounted on a plurality of computers 900.

**Claims**

1. A monitoring plan generation device (10) comprising:

   a priority setting unit (14) configured to set, for monitoring map information (200) which is a virtual area corresponding to a monitoring area (100) indicating an entire area monitored by an uncrewed vehicle (20-1, ..., 20-N) and which is input by a user or generated by a monitoring map creation unit (17) of the monitoring plan generation device (10), a countdown timer within which a corresponding sub-area needs to be monitored for each sub-area obtained by dividing the monitoring map information (200), and decrease the countdown timer over time; and
   an action plan creation unit (15) configured to create action plan information that establishes a movement route of the uncrewed vehicle (20-1, ..., 20-N) to give priority to monitoring the sub-area where there is a remaining time of the countdown timer smaller than the remaining time of the countdown timer of another sub-area,
   wherein, if a certain area in the monitoring area is monitored by the uncrewed vehicle (20-1, ..., 20-N) when the uncrewed vehicle has moved on the basis of the action plan information, the priority setting unit resets the countdown timer of the sub-area corresponding to the certain area to an initial value thereof.

2. The monitoring plan generation device according to claim 1,
   wherein the action plan creation unit (15) is configured to create the action plan information by giving priority to reducing a cost of moving the uncrewed vehicle (20-1, ..., 20-N) to the sub-area, in addition to giving priority to the sub-area where there is a remaining time smaller than the remaining time of the countdown timer of another sub-area.

3. The monitoring plan generation device according to claim 1 or 2, further comprising:

   a monitored area identification unit (13) configured to identify the sub-area corresponding to an area monitored by the uncrewed vehicle (20-1, ..., 20-N) as a monitored area,
   wherein the priority setting unit (14) is configured to reset the countdown timer of the sub-area corresponding to an area identified by the monitored area identification unit (13) to the initial value thereof.

4. The monitoring plan generation device according to claim 3,
   wherein the monitored area identification unit (13) is configured to identify the sub-area corresponding to positional information as the monitored area on the basis of time-series positional information of the uncrewed vehicle (20-1, ..., 20-N).

5. The monitoring plan generation device according to claim 3 or 4,
   wherein the monitored area identification unit (13) is configured to analyze an image photographed by the uncrewed vehicle (20-1, ..., 20-N) and to identify the sub-area corresponding to a position at which the image is photographed as the monitored area when the image contains a monitoring target.

6. The monitoring plan generation device according to any one of claims 3 to 5,
   wherein the monitored area identification unit (13) is configured to calculate a movement route of the uncrewed vehicle (20-1, ..., 20-N) on the basis of time-series positional information of the uncrewed vehicle, and identify the sub-area corresponding to the calculated movement route as the monitored area when a difference between the calculated movement route and a predetermined movement route is within an allowable range.

7. The monitoring plan generation device according to any one of claims 1 to 6, further comprising:
   a monitoring map creation unit (17) configured to acquire map information of the monitoring area (100) and create the monitoring map information (200) on the basis of the map information.

8. The monitoring plan generation device according to any one of claims 1 to 7, further comprising:
   a monitoring map creation unit (17) configured to receive specification of a range of the monitoring area (100) and create the monitoring map information for the received range (200).

9. A monitoring system (1) comprising:

the monitoring plan generation device (10) according to any one of claims 1 to 8; and
one or a plurality of uncrewed vehicles (20-1, ..., 20-N) configured to behave on the basis of the action plan information.

**10.** A monitoring plan generation method comprising:

a step of setting (S2), for monitoring map information (200) which is a virtual area corresponding to a monitoring area (100) indicating an entire area monitored by an uncrewed vehicle (20-1, ..., 20-N) and which is input by a user or generated by a monitoring map creation unit (17) of the monitoring plan generation device (10), a countdown timer within which a corresponding sub-area needs to be monitored for each sub-area obtained by dividing the monitoring map information, and decreasing (S5) the countdown timer over time;
a step of creating action plan information (S6) that establishes a movement route of the uncrewed vehicle (20-1, ..., 20-N) to give priority to monitoring the sub-area where there is a remaining time of the countdown timer smaller than the remaining time of the countdown timer of another sub-area, and
a step of resetting (S10), if a certain area in the monitoring area (100) is monitored by the uncrewed vehicle (20-1, ..., 20-N) when the uncrewed vehicle has moved on the basis of the action plan information, the countdown timer of the sub-area corresponding to the certain area to an initial value thereof.

**11.** A program causing a computer to execute:

a step of setting (S2), for monitoring map information (200) which is a virtual area corresponding to a monitoring area (100) indicating an entire area monitored by an uncrewed vehicle (20-1, ..., 20-N) and which is input by a user or generated by a monitoring map creation unit (17) of the monitoring plan generation device (10), a countdown timer within, a countdown timer within which a corresponding sub-area needs to be monitored for each sub-area obtained by dividing the monitoring map information, and decreasing (S5) the countdown timer over time;
a step of creating action plan information (S6) that establishes a movement route of the uncrewed vehicle (20-1, ..., 20-N) to give priority to monitoring the sub-area where there is a remaining time of the countdown timer smaller than the remaining time of the countdown timer of another sub-area, and
a step of resetting (S10), if a certain area in the monitoring area (100) is monitored by the uncrewed vehicle (20-1, ..., 20-N) when the uncrewed vehicle has moved on the basis of the action plan information, the countdown timer of the sub-area corresponding to the certain area to an initial value thereof.

**Patentansprüche**

**1.** Überwachungsplan-Erzeugungsvorrichtung (10), umfassend:

eine Prioritätseinstelleinheit (14), die konfiguriert ist, um für Überwachungskarteninformationen (200), die ein virtueller Bereich sind, der einem Überwachungsbereich (100) entspricht, der einen gesamten durch ein unbemanntes Fahrzeug (20-1, ..., 20-N) überwachten Bereich angibt, und die durch einen Benutzer eingegeben oder durch eine Überwachungskartenerstellungseinheit (17) der Überwachungsplan-Erzeugungsvorrichtung (10) erzeugt wird, für jeden Teilbereich, der durch Aufteilen der Überwachungskarteninformation (200) erhalten wird, einen Countdown-Zeitgeber einzustellen, innerhalb dessen ein entsprechender Teilbereich überwacht werden muss, und den Countdown-Zeitgeber mit der Zeit zu verringern; und
eine Aktionsplan-Erstellungseinheit (15), die konfiguriert ist, um Aktionsplaninformationen zu erstellen, die eine Bewegungsroute des unbemannten Fahrzeugs (20-1, ..., 20-N) festlegen, um einem Überwachen des Teilbereichs Priorität zu geben, bei dem es eine Restzeit des Countdown-Zeitgebers gibt, die kleiner ist als die Restzeit des Countdown-Zeitgebers eines anderen Teilbereichs,
wobei, wenn ein gewisser Bereich in dem Überwachungsbereich durch das unbemannte Fahrzeug (20-1, ..., 20-N) überwacht wird, wenn sich das unbemannte Fahrzeug basierend auf den Aktionsplaninformationen bewegt hat, die Prioritätseinstelleinheit den Countdown-Zeitgeber des Teilbereichs, der dem gewissen Bereich entspricht auf einen Anfangswert davon zurücksetzt.

**2.** Überwachungsplan-Erzeugungsvorrichtung nach Anspruch 1,
wobei die Aktionsplan-Erstellungseinheit (15) konfiguriert ist, um die Aktionsplaninformationen zu erstellen, indem einem Verringern von Kosten für ein Bewegen des unbemannten Fahrzeugs (20-1, ..., 20-N) zu dem Teilbereich zusätzlich zu einem Priorisieren des Teilbereichs, bei dem es eine Restzeit gibt, die kleiner ist als die Restzeit des Countdown-Zeitgebers eines anderen Teilbereichs, Priorität gegeben wird.

3. Überwachungsplan-Erzeugungsvorrichtung nach Anspruch 1 oder 2, ferner umfassend:

   eine Identifizierungseinheit für überwachten Bereich (13), die konfiguriert ist, um den Teilbereich, der einem durch das unbemannte Fahrzeug (20-1, ..., 20-N) überwachten Bereich entspricht, als überwachten Bereich zu identifizieren,
   wobei die Prioritätseinstelleinheit (14) konfiguriert ist, um den Countdown-Zeitgeber des Teilbereichs, der einem Bereich entspricht, der durch die Identifizierungseinheit für überwachten Bereich (13) identifiziert wird, auf den Anfangswert davon zurückzusetzen.

4. Überwachungsplan-Erzeugungsvorrichtung nach Anspruch 3,
   wobei die Identifizierungseinheit für überwachten Bereich (13) konfiguriert ist, um den Teilbereich, der Positionsinformationen entspricht, basierend auf Zeitreihen-Positionsinformationen des unbemannten Fahrzeugs (20-1, ..., 20-N) als den überwachten Bereich zu identifizieren.

5. Überwachungsplan-Erzeugungsvorrichtung nach Anspruch 3 oder 4,
   wobei die Identifizierungseinheit für überwachten Bereich (13) konfiguriert ist, um ein Bild, das durch das unbemannte Fahrzeug (20-1, ..., 20-N) aufgenommen wird, zu analysieren und um den Teilbereich, der einer Position entspricht, an der das Bild aufgenommen wird, als den überwachten Bereich zu identifizieren, wenn das Bild ein Überwachungsziel enthält.

6. Überwachungsplan-Erzeugungsvorrichtung nach einem der Ansprüche 3 bis 5,
   wobei die Identifizierungseinheit für überwachten Bereich (13) konfiguriert ist, um eine Bewegungsroute des unbemannten Fahrzeugs (20-1, ..., 20-N) basierend auf Zeitreihen-Positionsinformationen des unbemannten Fahrzeugs zu berechnen und den Teilbereich, der der berechneten Bewegungsroute entspricht, als den überwachten Bereich zu identifizieren, wenn eine Differenz zwischen der berechneten Bewegungsroute und einer vorbestimmten Bewegungsroute innerhalb eines zulässigen Bereichs ist.

7. Überwachungsplan-Erzeugungsvorrichtung nach einem der Ansprüche 1 bis 6, ferner umfassend:
   eine Überwachungskartenerstellungseinheit (17), die konfiguriert ist, um Karteninformationen des Überwachungsbereichs (100) zu erfassen und die Überwachungskarteninformationen (200) basierend auf den Karteninformationen zu erstellen.

8. Überwachungsplan-Erzeugungsvorrichtung nach einem der Ansprüche 1 bis 7, ferner umfassend:
   eine Überwachungskartenerstellungseinheit (17), die konfiguriert ist, um eine Angabe eines Bereichs des Überwachungsbereichs (100) zu empfangen und die Überwachungskarteninformationen für den empfangenen Bereich (200) zu erstellen.

9. Überwachungssystem (1), umfassend:

   die Überwachungsplan-Erzeugungsvorrichtung (10) nach einem der Ansprüche 1 bis 8; und
   ein oder eine Vielzahl unbemannter Fahrzeuge (20-1, ..., 20-N), die konfiguriert sind, um sich basierend auf den Aktionsplaninformationen zu verhalten.

10. Überwachungsplan-Erzeugungsverfahren, umfassend:

    einen Schritt eines Einstellens (S2), für Überwachungskarteninformationen (200), die ein virtueller Bereich sind, der einem Überwachungsbereich (100) entspricht, der einen gesamten durch ein unbemanntes Fahrzeug (20-1, ..., 20-N) überwachten Bereich angibt, und die durch einen Benutzer eingegeben oder durch eine Überwachungskartenerstellungseinheit (17) der Überwachungsplan-Erzeugungsvorrichtung (10) erzeugt wird, eines Countdown-Zeitgebers, innerhalb dessen ein entsprechender Teilbereich für jeden Teilbereich überwacht werden muss, der durch Aufteilen der Überwachungskarteninformationen erlangt wird, und eines Verringerns (S5) des Countdown-Zeitgebers mit der Zeit;
    einen Schritt eines Erstellens von Aktionsplaninformationen (S6), die eine Bewegungsroute des unbemannten Fahrzeugs (20-1, ..., 20-N) festlegen, um einem Überwachen des Teilbereichs Priorität zu geben, bei dem es eine Restzeit des Countdown-Zeitgebers gibt, die kleiner ist als die Restzeit des Countdown-Zeitgebers eines anderen Teilbereichs, und
    einen Schritt eines Zurücksetzens (S10), wenn ein gewisser Bereich in dem Überwachungsbereich (100) durch das unbemannte Fahrzeug (20-1, ..., 20-N) überwacht wird, wenn sich das unbemannte Fahrzeug basierend auf den Aktionsplaninformationen bewegt hat, des Countdown-Zeitgebers des dem bestimmten Bereich entsprechenden Teilbereichs auf einen Anfangswert davon.

11. Programm, das einen Computer veranlasst, Folgendes auszuführen:

einen Schritt eines Einstellens (S2), für Überwachungskarteninformationen (200), die ein virtueller Bereich sind, der einem Überwachungsbereich (100) entspricht, der einen gesamten durch ein unbemanntes Fahrzeug (20-1, ..., 20-N) überwachten Bereich angibt, und die durch einen Benutzer eingegeben oder durch eine Überwachungskartenerstellungseinheit (17) der Überwachungsplan-Erzeugungsvorrichtung (10) erzeugt wird, eines Countdown-Zeitgebers, innerhalb dessen ein entsprechender Teilbereich für jeden Teilbereich überwacht werden muss, der durch Aufteilen der Überwachungskarteninformationen erlangt wird, und eines Verringerns (S5) des Countdown-Zeitgebers mit der Zeit;
einen Schritt eines Erstellens von Aktionsplaninformationen (S6), die eine Bewegungsroute des unbemannten Fahrzeugs (20-1, ..., 20-N) festlegen, um einem Überwachen des Teilbereichs Priorität zu geben, bei dem es eine Restzeit des Countdown-Zeitgebers gibt, die kleiner ist als die Restzeit des Countdown-Zeitgebers eines anderen Teilbereichs, und
einen Schritt eines Zurücksetzens (S10), wenn ein gewisser Bereich in dem Überwachungsbereich (100) durch das unbemannte Fahrzeug (20-1, ..., 20-N) überwacht wird, wenn sich das unbemannte Fahrzeug basierend auf den Aktionsplaninformationen bewegt hat, des Countdown-Zeitgebers des dem bestimmten Bereich entsprechenden Teilbereichs auf einen Anfangswert davon.

## Revendications

1. Dispositif de génération de plan de surveillance (10), comprenant :

une unité de réglage de priorité (14) configurée pour régler, pour des informations de carte de surveillance (200) qui sont une zone virtuelle correspondant à une zone de surveillance (100) indiquant une zone entière surveillée par un véhicule non habité (20-1, ..., 20-N) et qui sont saisies par un utilisateur ou générées par une unité de création de carte de surveillance (17) du dispositif de génération de plan de surveillance (10), un temporisateur à compte à rebours au cours duquel une sous-zone correspondante doit être surveillée pour chaque sous-zone obtenue en divisant les informations de carte de surveillance (200), et diminuer le temporisateur à compte à rebours au fil du temps ; et
une unité de création de plan d'action (15) configurée pour créer des informations de plan d'action qui établissent un itinéraire de déplacement du véhicule non habité (20-1, ..., 20-N) afin de donner la priorité à la surveillance de la sous-zone dans laquelle il existe un temps restant du temporisateur à compte à rebours inférieur au temps restant du temporisateur à compte à rebours d'une autre sous-zone,
dans lequel, si une zone donnée dans la zone de surveillance est surveillée par le véhicule non habité (20-1, ..., 20-N) lorsque le véhicule non habité s'est déplacé sur la base des informations de plan d'action, l'unité de réglage de priorité réinitialise le temporisateur à compte à rebours de la sous-zone correspondant à la zone donnée à sa valeur initiale.

2. Dispositif de génération de plan de surveillance selon la revendication 1,
dans lequel l'unité de création de plan d'action (15) est configurée pour créer les informations de plan d'action en donnant la priorité à la réduction d'un coût de déplacement du véhicule non habité (20-1, ..., 20-N) vers la sous-zone, en plus de donner la priorité à la sous-zone dans laquelle il existe un temps restant inférieur au temps restant du temporisateur à compte à rebours d'une autre sous-zone.

3. Dispositif de génération de plan de surveillance selon la revendication 1 ou 2, comprenant en outre :

une unité d'identification de zone surveillée (13) configurée pour identifier la sous-zone correspondant à une zone surveillée par le véhicule non habité (20-1, ..., 20-N) comme étant une zone surveillée,
dans lequel l'unité de réglage de priorité (14) est configurée pour réinitialiser le temporisateur à compte à rebours de la sous-zone correspondant à une zone identifiée par l'unité d'identification de zone surveillée (13) à sa valeur initiale.

4. Dispositif de génération de plan de surveillance selon la revendication 3,
dans lequel l'unité d'identification de zone surveillée (13) est configurée pour identifier la sous-zone correspondant à des informations de position comme étant la zone surveillée sur la base d'informations de position en série temporelle du véhicule non habité (20-1, ..., 20-N).

5. Dispositif de génération de plan de surveillance selon la revendication 3 ou 4, dans lequel l'unité d'identification de zone surveillée (13) est configurée pour analyser une image photographiée par le véhicule non habité (20-1, ..., 20-N) et pour identifier la sous-zone correspondant à une position à laquelle l'image est photographiée comme étant la zone surveillée lorsque l'image contient une cible de surveillance.

6. Dispositif de génération de plan de surveillance selon l'une quelconque des revendications 3 à 5, dans lequel l'unité d'identification de zone surveillée (13) est configurée pour calculer un itinéraire de déplacement du véhicule non habité (20-1, ..., 20-N) sur la base d'informations de position en série temporelle du véhicule non habité, et pour identifier la sous-zone correspondant à l'itinéraire de déplacement calculé comme étant la zone surveillée lorsqu'une différence entre l'itinéraire de déplacement calculé et un itinéraire de déplacement prédéterminé se situe dans une plage admissible.

7. Dispositif de génération de plan de surveillance selon l'une quelconque des revendications 1 à 6, comprenant en outre :
une unité de création de carte de surveillance (17) configurée pour acquérir des informations cartographiques de la zone de surveillance (100) et créer les informations de carte de surveillance (200) sur la base des informations cartographiques.

8. Dispositif de génération de plan de surveillance selon l'une quelconque des revendications 1 à 7, comprenant en outre :
une unité de création de carte de surveillance (17) configurée pour recevoir une spécification d'une plage de la zone de surveillance (100) et créer les informations de carte de surveillance pour la plage reçue (200).

9. Système de surveillance (1), comprenant :

le dispositif de génération de plan de surveillance (10) selon l'une quelconque des revendications 1 à 8 ; et
un ou une pluralité de véhicules non habités (20-1, ..., 20-N) configurés pour se comporter en fonction des informations de plan d'action.

10. Procédé de génération de plan de surveillance, comprenant :

une étape de réglage (S2), pour des informations de carte de surveillance (200) qui sont une zone virtuelle correspondant à une zone de surveillance (100) indiquant une zone entière surveillée par un véhicule non habité (20-1, ..., 20-N) et qui sont saisies par un utilisateur ou générées par une unité de création de carte de surveillance (17) du dispositif de génération de plan de surveillance (10), d'un temporisateur à compte à rebours au cours duquel une sous-zone correspondante doit être surveillée pour chaque sous-zone obtenue en divisant les informations de carte de surveillance, et de diminution (S5) du temporisateur à compte à rebours au fil du temps ;
une étape de création d'informations de plan d'action (S6) qui établissent un itinéraire de déplacement du véhicule non habité (20-1, ..., 20-N) afin de donner la priorité à la surveillance de la sous-zone dans laquelle il existe un temps restant du temporisateur à compte à rebours inférieur au temps restant du temporisateur à compte à rebours d'une autre sous-zone, et
une étape de réinitialisation (S10), si une zone donnée dans la zone de surveillance (100) est surveillée par le véhicule non habité (20-1, ..., 20-N) lorsque le véhicule non habité s'est déplacé sur la base des informations de plan d'action, du temporisateur à compte à rebours de la sous-zone correspondant à la zone donnée à sa valeur initiale.

11. Programme amenant un ordinateur à exécuter :

une étape de réglage (S2), pour des informations de carte de surveillance (200) qui sont une zone virtuelle correspondant à une zone de surveillance (100) indiquant une zone entière surveillée par un véhicule non habité (20-1, ..., 20-N) et qui sont saisies par un utilisateur ou générées par une unité de création de carte de surveillance (17) du dispositif de génération de plan de surveillance (10), d'un temporisateur à compte à rebours au cours duquel une sous-zone correspondante doit être surveillée pour chaque sous-zone obtenue en divisant les informations de carte de surveillance, et de diminution (S5) du temporisateur à compte à rebours au fil du temps ;
une étape de création d'informations de plan d'action (S6) qui établissent un itinéraire de déplacement du

14

véhicule non habité (20-1, ..., 20-N) afin de donner la priorité à la surveillance de la sous-zone dans laquelle il existe un temps restant du temporisateur à compte à rebours inférieur au temps restant du temporisateur à compte à rebours d'une autre sous-zone, et

une étape de réinitialisation (S10), si une zone donnée dans la zone de surveillance (100) est surveillée par le véhicule non habité (20-1, ..., 20-N) lorsque le véhicule non habité s'est déplacé sur la base des informations de plan d'action, du temporisateur à compte à rebours de la sous-zone correspondant à la zone donnée à sa valeur initiale.

# FIG. 1

FIG. 2A

100

101

FIG. 2B

|   | 1 | 2 | 3 | 4 | 5 | 6 |
|---|---|---|---|---|---|---|
| A | 10 | 10 | 10 | 10 | 10 | 10 |
| B | 10 | 5 | 2 | 2 | 2 | 10 |
| C | 10 | 5 | 2 | 2 | 2 | 10 |
| D | 10 | 5 | 5 | 2 | 2 | 5 |
| E | 10 | 5 | 5 | 5 | | 5 |
| F | 10 | 5 | 5 | 5 | 5 | 5 |

201

200

## FIG. 3A

|   | 1 | 2 | 3 | 4 | 5 | 6 |
|---|---|---|---|---|---|---|
| A | 9 | 9 | 9 | 9 | 9 | 9 |
| B | 9 | 4 | 1 | 1 | 1 | 9 |
| C | 9 | 4 | 1 | 1 | 1 | 9 |
| D | 9 | 4 | 4 | 1 | 1 | 4 |
| E | 9 | 4 | 4 | 4 |   | 4 |
| F | 9 | 4 | 4 | 4 | 4 | 4 |

202

201

200

## FIG. 3B

|   | 1 | 2 | 3 | 4 | 5 | 6 |
|---|---|---|---|---|---|---|
| A | 8 | 8 | 8 | 8 | 8 | 8 |
| B | 8 | 3 | 0 | 2 | 2 | 8 |
| C | 8 | 3 | 0 | 2 | 2 | 8 |
| D | 8 | 3 | 3 | 2 | 2 | 3 |
| E | 8 | 3 | 3 | 5 |   | 3 |
| F | 8 | 3 | 3 | 5 | 5 | 3 |

202

201

200

FIG. 4

## FIG. 5A

| | 1 | 2 | 3 | 4 | 5 | 6 | 7 | 8 | 9 | 10 |
|---|---|---|---|---|---|---|---|---|---|---|
| A | | | | | | | | | | |
| B | | | | | | | | | | |
| C | | | | | | | | | | |
| D | | | | | | | | | | |
| E | | | | | | | | | | |
| F | | | | | | | | | | |
| G | | | | | | | | | | |
| H | | | | | | | | | | |
| I | | | | | | | | | | |
| J | | | | | | | | | | |
| K | | | | | | | | | | |
| L | | | | | | | | | | |
| M | | | | | | | | | | |
| N | | | | | | | | | | |

## FIG. 5B

| | 1 | 2 | 3 | 4 | 5 | 6 | 7 | 8 | 9 | 10 |
|---|---|---|---|---|---|---|---|---|---|---|
| A | | 5 | 5 | | 10 | | 10 | | | |
| B | | 5 | 5 | | 10 | | 10 | | | |
| C | | 5 | 5 | | 10 | | 10 | | | |
| D | | 5 | 5 | | 10 | | 10 | | | |
| E | | 5 | 5 | | 10 | | 10 | | | |
| F | | 5 | 5 | | 10 | | 5 | 5 | 5 | 5 |
| G | | 5 | 5 | | 10 | | 5 | 5 | 5 | 5 |
| H | 10 | 5 | 5 | 10 | 10 | 10 | 10 | | | |
| I | | 5 | 5 | | 10 | | 10 | | | |
| J | | 5 | 5 | | 10 | | 10 | | | |
| K | | 5 | 5 | | 10 | | 10 | | | |
| L | | 5 | 5 | 10 | 10 | 10 | 10 | | | |
| M | | 5 | 5 | | 10 | | 10 | | | |
| N | | 5 | 5 | | 10 | | 10 | | | |

# FIG. 6

```
                          ┌──────────┐
                          │  START   │
                          └─────┬────┘
                                │
           ┌────────────────────▼────────────────────┐
           │         CREATE MONITORING MAP           │──── S1
           └────────────────────┬────────────────────┘
                                │
           ┌────────────────────▼────────────────────┐
           │ SET MONITORING TIME INTERVAL OF EACH CELL│──── S2
           └────────────────────┬────────────────────┘
                                │
           ┌────────────────────▼────────────────────┐
           │    SET INFORMATION ON UNCREWED VEHICLE   │──── S3
           └────────────────────┬────────────────────┘
                                │
           ┌────────────────────▼────────────────────┐
           │            START MONITORING              │──── S4
           └────────────────────┬────────────────────┘
```

PROCESSING B

S6
CALCULATE ACTION PLAN

S7
INSTRUCT MONITORING ROUTE

S8
ACQUIRE SENSOR INFORMATION

S9
IDENTIFY MONITORED AREA

S10
RESET MONITORING TIME
INTERVAL OF MONITORED AREA

PROCESSING A

S5
DECREASE MONITORING
TIME INTERVAL

S11
IS MONITORING ENDED?

NO

YES

END

## FIG. 7A

## FIG. 7B

CELLS THAT ARE NOT SUBJECT TO RESET

FIG. 8

20-2

100

20-1

FIG. 9

900

901
CPU

902
MAIN STORAGE
DEVICE

903
AUXILIARY STORAGE
DEVICE

904
INPUT/OUTPUT
INTERFACE

905
COMMUNICATION
I/F

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021054905 A
- WO 2019171491 A
- WO 2020188818 A
- WO 2019215838 A
- US 2018283870 A